# EUROPEAN PATENT APPLICATION

(11) **EP 1 034 729 A1**
(43) Date of publication of application: **13.09.2000**
(21) Application number: 00104975.8
(22) Date of filing: 09.03.2000
(51) Int. Cl.: A47J 31/06

(54) **Espresso coffee machine**

(30) Priority: 12.03.1999 IT TO990042
(71) Applicant: ESSEGIELLE S.r.l, I-10156 Torino (IT)
(72) Inventor: Cortese, Virginio, 10100 Torino (IT)
(74) Representative: Jorio, Paolo

(57) **Abstract**

On an espresso coffee machine (1), a coffee-holder cup (4) for receiving a rigid filtering container (5), such as a rigid wafer, engages in sliding manner a supporting fork (6) and translates crosswise along the fork (6) into a position beneath and coaxial with a piston (37), through which hot water under pressure is fed, and which mates frontally and in fluidtight manner with an edge (20) of the rigid filtering container (5) by virtue of the thrust exerted by the hot water under pressure.

## Description

The present invention relates to an espresso coffee machine.

On known espresso coffee machines, the coffee-holder cup - hereinafter referred to simply as a "cup" - is connected to the outlet end of a boiler for supplying hot water under pressure, by interposing, between the cup and the boiler, a tubular body integral with the bottom end of the boiler and having, on its own inner surface, two sloping tracks which cooperate with respective ribs projecting radially from the cup to form, with the ribs, a releasable, fluidtight bayonet joint between the cup and boiler.

Known machines of the above type have the drawback of involving a series of complex, precise movements on the part of the user to connect the cup in fluidtight manner to the boiler. That is, the user must first set the cup to a given angular connecting position beneath the boiler, must then move the cup axially so that the ribs engage the respective sloping tracks, and must then rotate the cup with respect to the boiler to fit the cup tightly in fluidtight manner to the bottom of the boiler.

Known machines of the above type also have the further drawback of adapting poorly to the use of cups designed to accommodate not only a rigid, cup-shaped coffee filter but also a rigid preformed wafer, in which case, fluidtight connection by rotating the cup with respect to the boiler must be made between the boiler itself and an edge of the rigid filter or wafer, which may rotate with respect to the cup and break when tightening the cup to the boiler.

It is an object of the present invention to provide an espresso coffee machine designed to eliminate the aforementioned drawbacks.

More specifically, it is an object of the present invention to provide a coffee machine wherein connection of the cup to the boiler is simplified greatly with respect to the known art and permits safe use of wafer-holder cups.

According to the present invention, there is provided an espresso coffee machine comprising a boiler having a longitudinal axis and for supplying hot water under pressure; a cup for a rigid filtering container for housing a quantity of ground coffee and having a peripheral edge resting on an open end of the cup; and a supporting member for supporting said cup in a work position wherein the cup is located beneath and coaxial with said boiler; characterized in that said supporting member comprises at least one guide extending in a direction crosswise to said longitudinal axis; said cup having connecting means for engaging said guide in sliding manner and translating in said direction to and from said work position; and movable sealing means being interposed between said boiler and said cup to connect the boiler to said edge of the rigid filtering container in fluidtight manner and by virtue of the thrust exerted by said hot water under pressure.

A non-limiting embodiment of the invention will be described by way of example with reference to the accompanying drawings, in which:

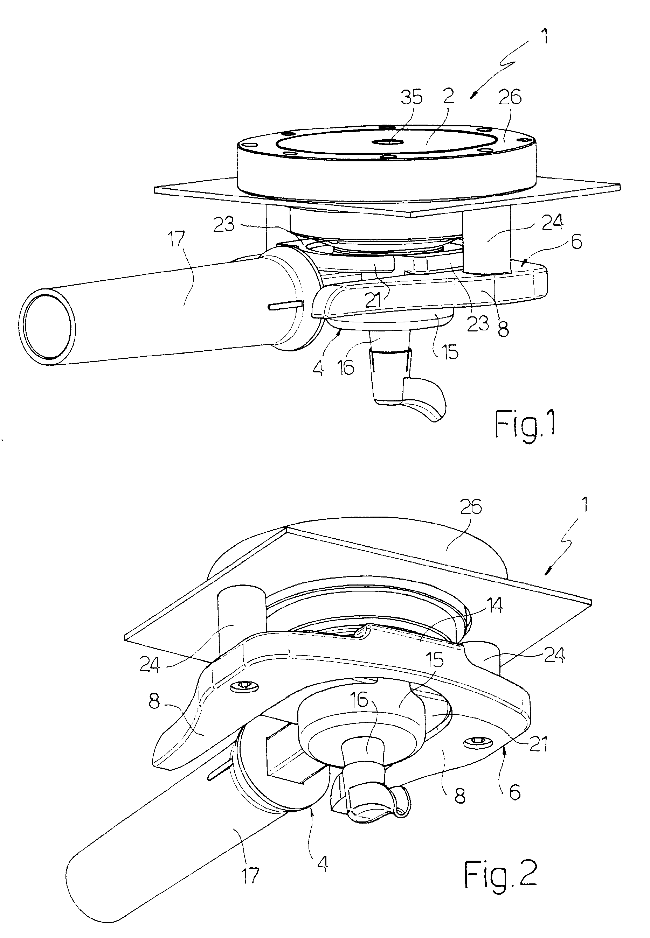

Figures 1 and 2 show views in perspective of a preferred embodiment of the machine according to the present invention;

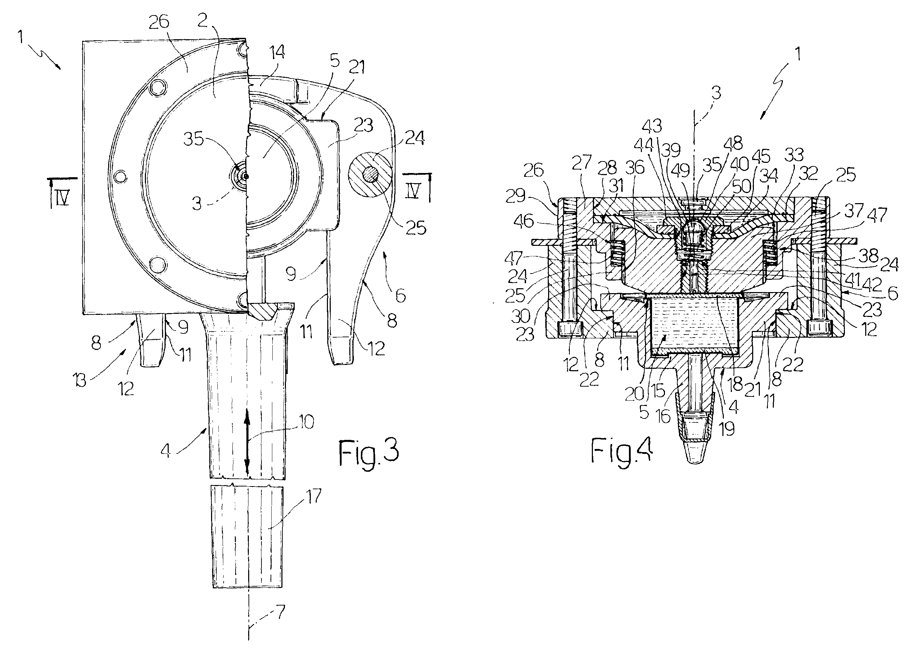

Figure 3 shows a plan view, with parts in section and parts removed for clarity, of the Figure 1 and 2 machine;
Figure 4 shows a section along line IV-IV in Figure 3.

Number 1 in the accompanying drawings indicates as a whole an espresso coffee machine comprising a boiler 2 having a longitudinal axis 3 and for supplying hot water under pressure to a coffee-holder cup 4 for receiving a rigid filtering container 5 containing a quantity of ground coffee. Machine 1 also comprises a supporting member 6 for supporting cup 4 in a work position wherein cup 4 is located beneath and coaxial with boiler 2.

Supporting member 6 is substantially fork-shaped, extends about cup 4 and along a respective axis 7 of symmetry perpendicular to axis 3, and comprises two arms S parallel to axis 7 and located on opposite sides of axis 7 to define a guide 9, which cup 4 engages in sliding manner to translate to and from said work position in a direction 10 parallel to axis 7. More specifically, each arm 8 is defined, on the side facing the other arm 8, by a flat surface 11 parallel to surface 11 of the other arm 8 and to axis 7, and on top by a flat surface 12 perpendicular to axis 3 and to surfaces 11 and coplanar with surface 12 of the other arm 8.

Guide 9 comprises an input portion 13, which projects outwards with respect to boiler 2 to define a support for cup 4 prior to insertion of cup 4 beneath boiler 2; and a stop shoulder 14 extending perpendicularly to surfaces 11 to arrest cup 4 in the work position.

Cup 4 comprises a cup-shaped cylindrical body 15, which in turn comprises an open top end, a central coffee drain conduit 16, and a handle 17 extending radially from the outer surface of body 15. Body 15 houses said container 5, which is closed at opposite ends by two perforated walls 18 and 19 perpendicular to axis 3; wall 18 is positioned facing boiler 2 to define a sprinkler for the hot water supplied by boiler 2; and wall 19 is positioned facing drain conduit 16 to define a coffee filter. Container 5 also comprises a peripheral edge 20 surrounding and projecting axially from wall 18, and which rests on a free edge of the open top end of cup 4.

A flange 21 extends radially outwards from the outer surface of body 15, and has two parallel, substantially flat lateral surfaces 22 substantially parallel to a longitudinal axis of handle 17 and separated by a distance approximately equal to but no greater than the distance between surfaces 11.

Flange 21 also has two appendixes 23, each of which projects radially outwards from and perpendicularly to respective surface 22, and is positioned contacting relative surface 12 of relative arm 8 when flange 21 engages guide 9 and is positioned with surfaces 22 contacting surfaces 11 of supporting member 6.

Supporting member 6 comprises two tubular spacers 24, each of which extends upwards from a respective arm 8 and is fitted through with a screw 25 connecting supporting member 6 to an outer peripheral ring of a tubular body 26 coaxial with axis 3 and integral with boiler 2.

Tubular body 26 comprises a substantially cylindrical lateral wall 27 having an inner surface 28 and an outer surface 29, both stepped and tapering towards axis 3, and a bottom inner annular flange 30. A shoulder 31 is formed on inner surface 28 to clamp a peripheral edge 32 of a deformable membrane 33 against a bottom end of boiler 2 and define a variable-volume chamber 34 connected to an outlet 35 of boiler 2.

A piston 37 is fitted in sliding manner through a hole 36 defined by flange 30 and coaxial with axis 3, is located beneath chamber 34, and is movable, along axis 3 and through hole 36, to and from a sealing position wherein piston 37 contacts peripheral edge 20 of container 5 in fluidtight manner, when container 5 is fitted inside cup 4 and cup 4 is in the work position coaxial with axis 3. In other words, piston 37 defines, at least partly, a movable sealing device 38 for connecting outlet 35 of bailer 2 to cup 4.

Piston 37 has a through hole 39 comprising two threaded portions, one facing membrane 33 and engaged by a tubular body 40, and the other engaged by a tubular body 41 defining, together with body 40, a channel 42 coaxial with axis 3 and permitting supply of hot water under pressure to cup 4. Tubular body 40 projects from the top of piston 37, engages a central hole 43 formed through membrane 33 coaxially with axis 3, and comprises a tubular top head 44, which, with the interposition of a sealing washer 45, grips a central portion of membrane 33 against a top face of piston 37.

When machine 1 is off and no hot water under pressure is supplied to chamber 34, piston 37 is maintained in a raised position and at a given distance from edge 20 of container 5 by the elastic thrust exerted on piston 37 by an elastic return device 46 forming part of movable sealing device 38 and comprising membrane 33 and a number of springs 47, which are equally spaced about axis 3, extend parallel to axis 3, and are interposed between piston 37 and tubular body 26.

Conversely, when machine 1 is on, the hot water under pressure supplied from boiler 2 increases the volume of chamber 34 and, overcoming the resistance of elastic device 46, moves piston 37 into the sealing position.

Tubular body 40 houses a nonreturn valve 48 comprising a shutter 49, which is movable, by virtue of the thrust exerted by the hot water under pressure and in opposition to a spring 50 coaxial with axis 3, from a normal closed position to an open position respectively closing and opening channel 42.

In connection with the above, it should be pointed out that the elastic force exerted by device 46 on piston 37 is less than that exerted by spring 50 on shutter 49, so that, when machine 1 is on and hot water under pressure flows into chamber 34, the elastic responses of device 46 and spring 50 are such that piston 37 moves first into the sealing position, and then valve 48 into the open position, thus enabling boiler 2 and cup 4 to be connected first in fluidtight manner, and then channel 42 to be opened to supply hot water to cup 4.

Operation of machine 1 is easily deducible from the above description with no further explanation required.

It should be pointed out, however, that cup 4 is set to the work position beneath boiler 2 by the user simply resting cup 4 on input portion 13 of guide 9 and pushing the cup along guide 9 up to stop shoulder 14; and cup 4 is locked in the work position by the downward movement of piston 37.

## Claims

1. An espresso coffee machine comprising a boiler (2) having a longitudinal axis (3) and for supplying hot water under pressure; a cup (4) for a rigid filtering container (5) for housing a quantity of ground coffee and having a peripheral edge (20) resting on an open end of the cup (4); and a supporting member (6) for supporting said cup (4) in a work position wherein the cup (4) is located beneath and coaxial with said boiler (2); characterized in that said supporting member (6) comprises at least one guide (9) extending in a direction (10) crosswise to said longitudinal axis (3); said cup (4) having connecting means (21) for engaging said guide (9) in sliding manner and translating in said direction (10) to and from said work position; and movable sealing means (38) being interposed between said boiler (2) and said cup (4) to connect the boiler (2) to said edge (20) of the rigid filtering container (5) in fluidtight manner and by virtue of the thrust exerted by said hot water under pressure.

2. A machine as claimed in Claim 1, wherein said supporting member (6) is substantially fork-shaped, and comprises two arms (8) substantially parallel to each other and extending crosswise to said longitudinal axis (3); said two arms (8) being located on opposite sides of the longitudinal axis (3) to define said guide (9).

3. A machine as claimed in Claim 1 or 2, wherein said guide (9) comprises an input portion (13) projecting outwards with respect to said boiler (2) to define a support for said cup (4) prior to insertion of the cup (4) beneath the boiler (2).

4. A machine as claimed in any one of the foregoing Claims, wherein said guide (9) comprises a stop shoulder (14) extending crosswise to said longitudinal axis (3) and to said direction (10) to arrest said cup (4) in said work position.

5. A machine as claimed in any one of the foregoing Claims and comprising a tubular body (26) coaxial with said longitudinal axis (3) and integral with said boiler (2); said movable sealing means (38) comprising a piston (37) movable along said tubular body (26) to and from a sealing position wherein the piston (37) is positioned contacting said edge (20) in fluidtight manner.

6. A machine as claimed in Claim 5 and comprising a deformable membrane (33), and first clamping means (31) for connecting a peripheral edge (32) of the membrane (33) to said boiler (2) to define a variable-volume chamber (34) interposed between the boiler (2) and said piston (37); the boiler (2) having an outlet (35) communicating with said chamber (34).

7. A machine as claimed in Claim 6 and comprising second clamping means (40) for connecting a central portion of said membrane (33) to said piston (37); said movable sealing means (38) also comprising an elastic return device (46) for withdrawing said piston (37) from said sealing position in the absence of thrust by said hot water under pressure; and said membrane (33) forming part of said elastic return device (46).

8. A machine as claimed in Claim 7, wherein said elastic return device (46) also comprises a number of springs (47) parallel to said longitudinal axis (3) and interposed between said piston (37) and said tubular body (26).

9. A machine as claimed in one of Claims 6 to 8, wherein said piston (37) comprises a through channel (42) connecting said chamber (34) to said cup (4); valve means (48) being housed in said channel (42) to regulate supply of said hot water to the cup (4).

10. A machine as claimed in Claim 9, wherein said valve means (48) comprise a nonreturn valve (48) in turn comprising a shutter (49) movable, by virtue of the thrust exerted by said hot water and in opposition to elastic means (50), from a normal closed position to an open position respectively closing and opening said channel (42).
